# EUROPÄISCHE PATENTSCHRIFT

(11) **EP 2 382 122 B1**
(45) Veröffentlichungstag und Bekanntmachung des Hinweises auf die Patenterteilung: **27.03.2013**
(21) Anmeldenummer: 09765032.9
(22) Anmeldetag: 02.12.2009
(51) Int. Cl.: B62D 5/04, B62D 6/00

(54) **FAHRDYNAMISCHES STEUERUNGS- ODER REGELSYSTEM EINES ZWEISPURIGEN KRAFTFAHRZEUGS**
CONTROL OR REGULATING SYSTEM FOR DRIVING DYNAMICS OF A DOUBLE-TRACK MOTOR VEHICLE
SYSTÈME DE COMMANDE OU DE RÉGULATION DE DYNAMIQUE DE MARCHE D'UN VÉHICULE À MOTEUR À DEUX VOIES

(30) Priorität: 27.01.2009 DE 102009006211
(43) Veröffentlichungstag der Anmeldung: 02.11.2011
(73) Patentinhaber: Bayerische Motoren Werke Aktiengesellschaft, 80809 München (DE)
(72) Erfinder: GÖBEL, Mirek, 80809 München (DE); GROLL, Max, 80799 München (DE); SERARSLAN, Benan, 80807 München (DE)
(86) Internationale Anmeldenummer: PCT/EP2009/008578
(87) Internationale Veröffentlichungsnummer: WO 2010/085996

(56) Entgegenhaltungen:
- WO-A1-2005/054040
- WO-A1-2006/087141
- DE-A1- 10 260 752
- WEBER, INGO: "Verbesserungspotenzial von Stabilisierungssystemen im PKW durch eine Reibwertsensorik", HTTP://TUPRINTS.ULB.TU-DARMSTADT.DE/902/1/ WEBER_INGO_FZD_DISS.PDF, [Online] 18 May 2005 (2005-05-18), Retrieved from the Internet: URL:http://tuprints.ulb.tu-darmstadt.de/90 2/1/Weber_Ingo_FZD_Diss.pdf> [retrieved on 2012-06-21]

## Beschreibung

Die Erfindung betrifft ein fahrdynamisches Steuerungs- oder Regelsystem eines zweispurigen Kraftfahrzeugs nach dem Oberbegriff des Anspruchs 1. Zum Stand der Technik wird neben den unter der Bezeichnung "ESP" bekannten elektronischen Stabilitätsprogrammen und der DE 10 2006 019 732 A1 sowie der DE 10 2007 007 442 A1 insbesondere auf die WO 2005/054040 A1, WO 2006/087141 A1 und die DE 102 60 752 A1 verwiesen.

Bekanntlich arbeiten die gängigen elektronischen Stabilitätsprogramme oder Stabilisierungsprogramme im Fahrwerksbereich von Kraftfahrzeugen mit einem Soll-Ist-Vergleich hinsichtlich fahrdynamischer Kenngrößen, insbesondere hinsichtlich Querbeschleunigung und Gierrate, um zu überwachen, ob ein stabiler oder instabiler Fahrzustand vorliegt. Wenn sich die gemessenen tatsächlichen Werte von Gierrate und/oder Querbeschleunigung signifikant von den durch eine vorwiegend lineare Modell-Berechnung (insbesondere unter Berücksichtigung der aktuellen Fahrgeschwindigkeit und des aktuellen vom Fahrer vorgegebenen bzw. an den lenkbaren Fahrzeug-Rädern eingestellten Lenkwinkels) unterscheiden, so wird auf einen nicht linearen Fahrzustand geschlossen, das heißt dass sich das Fahrzeug zumindest im querdynamischen Grenzbereich bewegt. Möglicherweise kann jedoch dann bereits ein instabiler Fahrzustand vorliegen, weshalb die möglichst genaue Auslegung eines solchen Stabilitäts- oder Stabilisierungsprogramms eine äußerst komplexe Aufgabe ist.

Bekanntlich wird die Differenz zwischen der Messung und der Modellrechnung wird als Maß des nichtlinearen Verhaltens einer aktuellen Fahrzeugreaktion interpretiert. Diese Methode hat jedoch den Nachteil, dass das verwendete Modell die individuellen Fahrzeugparameter, wie Masse, Trägheitsmoment, Schräglaufsteifigkeit der Reifen, etc., möglichst exakt enthalten muss. Eine Änderung dieser Parameter bspw. durch Beladung verstimmt das Modell und vergrößert somit die Abweichung zwischen der Messung und der Simulation, so dass bei Verwendung dieser Methode durchaus ein aktueller Fahrzustand als nichtlinear interpretiert werden kann, obwohl das Fahrzeug ein lineares und somit unkritisches Verhalten zeigt.

Während die gängigen elektronischen Stabilitätsprogramme oder Stabilisierungsprogramme im Fahrwerksbereich von Kraftfahrzeugen spätestens bei Erkennen eines instabilen Fahrzustands, ggf. bereits bei Erkennen eines nichtlinearen Fahrzustands, eine geeignete Maßnahme zur Stabilisierung des Fahrzustands einleiten, insbesondere durch einseitiges Abbremsen eines Fahrzeug-Rades ein Gegen-Giermoment erzeugen, ist in der eingangs genannten DE 10 2006 019 732 A1 eine unter solchen Umständen selbsttätig eingeleitete Aktion beschrieben, mit welcher der Fahrer auf die Annäherung an den Grenzbereich hingewiesen wird. Diese Aktion besteht darin, dass mit Annäherung an den querdynamischen Grenzbereich dem Fahrer über das einen sog. Lenkmoment-Unterstützungsaktuator aufweisende Fahrzeug-Lenksystem ein spürbar größeres Unterstützungsmoment an seinem Lenkrad zur Verfügung gestellt wird. Indem dann die Lenkung für den Fahrer signifikant leichter zu betätigen ist als in gewohnten linearen und stabilen Fahrzuständen, wird hierdurch der Fahrer direkt darauf hingewiesen, dass sich das Fahrzeug zumindest im Grenzbereich bewegt.

Auch in der DE 10 2007 007 442 A1 ist eine Beeinflussung des für den Fahrer an seinem Lenkrad spürbaren Lenkmoments beschrieben, und zwar abhängig vom ermittelten Fahrbahn-Reibwert, wobei dann, wenn sich das Fahrzeug in einem querdynamischen Grenzbereich befindet oder sich diesem nähert, ein Zusatzmoment erzeugt wird, das den Betrag des Lenkmoments verringert, während bei Erreichen eines sich aus der Querdynamikbewertung ergebenden maximalen Lenkwinkelbetrags ein Zusatzmoment erzeugt wird, durch das der Betrag des Lenkmoments sprungähnlich vergrößert wird.

In der gattungsgemäβen WO 2005/054040 A1 ist ein Verfahren zum Unterstützen eines Fahrzeugbedieners beim Stabilisieren eines Fahrzeugs beschrieben, wobei eine Annäherung des aktuellen Fahrzustands des Fahrzeugs an den querdynamischen Grenzbereich überwacht wird und im Bedarfsfall eine geeignete Aktion eingeleitet wird, und wobei die Annäherung an den querdynamischen Grenzbereich aus einer Bewertung des Verlaufs des Rückstellmoments der zumindest einen geringfügigen Schräglaufwinkel oder Lenkwinkel aufweisenden Fahrzeug-Räder oder einer Ersatzgröße hierfür über dem Schräglaufwinkel oder Lenkwinkel ermittelt wird. Konkret wird hierfür ein Wert des auf den Lenkstrang des Fahrzeugs wirkenden Reifenrückstellmoments geschätzt. Daraufhin wird der Lenkstrang mit einem geeigneten das Fahrzeug stabilisierenden Zusatzmoment beaufschlagt.

In der WO 2006/001180 ist ein Verfahren zur Fahrstabilisierung eines Fahrzeugs anhand eines Seitenkraftbeiwerts beschrieben, wobei ein Radlenkwinkel solchermaßen eingestellt wird, dass die maximalen Schräglaufwinkel für (irgendwie) ermittelte Seitenkraftbeiwerte nicht überschritten werden.

Die Dissertation von Ingo Weber "Verbesserungspotenzial von Stabilisierungssystemen im PKW durch eine Reibwertsensorik", veröffentlicht 2007 durch die TU Darmstadt (HTTP://TUPRINTS.ULB.TU-DARMSTADT.DE/902/1/WEBER_INGO_FZD_DISS.PDF) geht auf die Reibverhältnisse im Fahrbahnkontakt ein, betrachtet diesen jedoch nicht für die Erkennung des querdynamischen Grenzbereiches innerhalb eines Zeitfensters.

Schließlich beschreibt die DE 102 60 752 A1 eine Servolenkvorrichtung eines Kraftfahrzeugs wobei insbesondere das Rückstellen des Lenkrades des Fahrzeugs beim Ausleiten einer Kurve für den Fahrer erleichtert wird, indem festgestellt wird, dass der Fahrer am Ende einer Kurvenfahrt die Kurve wieder auszuleiten versucht und daraufhin ein angemessenes Lenkrad-Rückstellmoment in Abhängigkeit der aktuellen Fahrsituation berechnet berechnet und das berechnete Lenkrad-Rückstellmoment in die Servolenkvorrichtung eingespeist wird.

Zurückkommend auf die weiter oben genannte Problematik, dass für einen Soll-IstVergleich zwischen einer theoretisch berechneten und einer gemessenen tatsächlichen Gierrate und/oder Querbeschleunigung eine äußert aufwändige Applikation erforderlich ist, wenn sichergestellt sein soll, dass eine Annäherung an den querdynamischen Grenzbereich trotz Unsicherheiten hinsichtlich der Modellparameter (bspw. bedingt durch Streuungen in der Bauteil-Fertigung oder Änderung von Parametern über der Nutzung oder Lebensdauer des Fahrzeugs) rechtzeitig und sicher erkannt wird, soll vorliegend ein demgegenüber zuverlässigeres und folglich einfacher applizierbares fahrdynamisches Steuerungs- oder Regelsystem eines zweispurigen Kraftfahrzeugs aufgezeigt werden. Es soll also eine Annäherung an den querdynamischen Grenzbereich früher und folglich sicherer erkannt werden können (= Aufgabe der vorliegenden Erfindung).

Die Lösung dieser Aufgabe ist für ein fahrdynamisches Steuerungssystem nach dem Oberbegriff des Anspruchs 1 dadurch gekennzeichnet, dass ein bei zunehmendem Lenkwinkel oder Schräglaufwinkel nicht weiter zunehmendes oder sich verringerndes Rückstellmoment als Indiz für das Erreichen des nichtlinearen Fahrverhaltens und somit des querdynamischen Grenzbereichs verwendet wird, wobei ein sogenannter Rückstellmoment-Indikator als Maß für die Änderung des Rückstellmoments in Relation zur Änderung des Lenkwinkels oder Schräglaufwinkels innerhalb eines Zeitfensters durch eine Regressionsanalyse oder eine Kohärenzanalyse gebildet wird. Vorteilhafte Weiterbildungen sind Inhalt der Unteransprüche.

Der grundsätzliche Gedanke der vorliegenden Erfindung besteht darin, an einem, vorzugsweise an beiden Rädern einer Achse des Fahrzeugs, das sog. Rückstellmoment zu betrachten, welches sich stets dann einstellt, wenn über dieses Rad bzw. dessen Reifen Seitenkräfte übertragen werden, was bekanntlich nur dann möglich ist, wenn am Rad (bzw. am Reifen) ein sog. Schräglaufwinkel (ungleich Null Grad) vorliegt. Bekanntlich resultiert ein Rückstellmoment an einem eingelenkten Rad bei (heute üblichem) negativen Lenkrollhalbmesser aus den Reifenseitenkräften, deren Verteilungsschwerpunkt im Reifenlatsch vom Durchstoßpunkt der Rad-Lenkachse durch die Fahrbahnebene um den Nachlauf beabstandet ist. Diese Reifenseitenkräfte erzeugen ein Drehmoment, das den Radlenkwinkel zu reduzieren versucht, nämlich das sog. Rückstellmoment. Dieses beruht also ausdrücklich nicht auf dem sog. Lenkungsrücklauf eines Lenkmoment-Unterstützungssystems. (Im übrigen wird in der weiteren Beschreibung der Einfachheit halber nicht mehr zwischen Reifen und Rad unterschieden; vielmehr wird soweit sinnvoll nur noch der Begriff "Rad" verwendet).

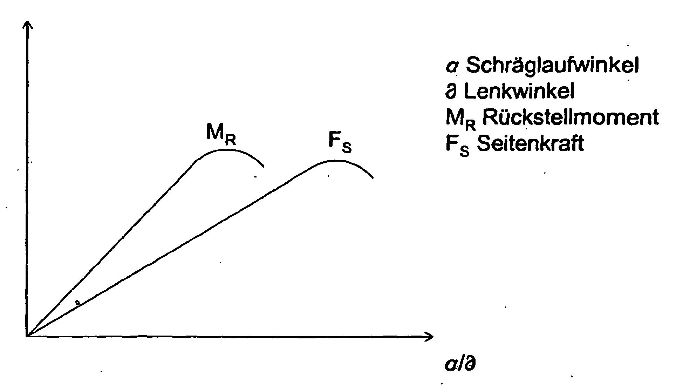

Der Verlauf des Rückstellmoments an einem einen Lenkwinkel oder Schräglaufwinkel aufweisenden Rad ist, wenn man dieses Rückstellmoment in einem kartesischen Koordinatensystem auf der Ordinate über dem die Abszisse abbildenden Schräglaufwinkel oder Lenkwinkel des Rades aufträgt, ähnlich dem Verlauf der übertragbaren Seitenkraft. Letztere nimmt bekanntlich mit größer werdendem Schräglaufwinkel oder Lenkwinkel im wesentlichen linear zu, bis bei einem gewissen Betrag des Schräglaufwinkels oder Lenkwinkels ein Maximum erreicht ist, wonach mit weiter ansteigendem Winkel-Betrag die übertragbare Seitenkraft rapide abnimmt. Letzteres stellt einen instabilen Fahrzustand dar, während bereits kurz vor Erreichen des genannten Maximums der querdynamische Grenzbereich beginnt. Hierzu wird auch auf die beigefügte einzige Figur verwiesen, die über dem Schräglaufwinkel bzw. Lenkwinkel den Verlauf der übertragbaren Seitenkraft (F_{S}) sowie des Rückstellmoments (M_{R}) beispielhaft zeigt.

Der Verlauf des genannten Rückstellmoments (M_{R}) eines einen Schräglaufwinkel aufweisenden Rades über dem Schräglaufwinkel oder Lenkwinkel ist nun ähnlich demjenigen der übertragbaren maximalen Seitenkraft (F_{S}), mit dem Unterschied, dass das Maximum des Rückstellmoments bei einem etwas niedrigeren (geringeren) Schräglaufwinkel oder Lenkwinkel liegt. Ursächlich hierfür ist, dass sich mit Annäherung an den querdynamischen Grenzbereich das Rückstellmoment bei unveränderter Seitenkraft verringert, da der Angriffspunkt der Seitenkraft seine Position in der Latschfläche des Reifens entsprechend verändert. Betrachtet oder bewertet man also den Verlauf des Rückstellmoments über dem Schräglaufwinkel oder dem Lenkwinkel eines Rades, so kann eine Annäherung an den querdynamischen Grenzbereich dadurch festgestellt werden, dass das Rückstellmoment bei zunehmendem Lenkwinkel oder Schräglaufwinkel nicht weiter zunimmt oder sich sogar verringert. Ein solches Verhalten des Rückstellmoments bildet somit ein Indiz für das Erreichen des nichtlinearen Fahrverhaltens und somit des querdynamischen Grenzbereichs.

Grundsätzlich kann ein einen Schräglaufwinkel aufweisendes Rad betrachtet werden, welches seinerseits nicht zwangsweise lenkbar sein muss. Somit kann an üblichen Kraftfahrzeugen mit nicht lenkbaren Hinterrädern auch an letzteren überwacht werden, ob eine Annäherung an den querdynamischen Grenzbereich erfolgt, wobei auf die Ermittlung des Rückstellmoments im weiteren noch näher eingegangen wird. Es kann aber auch ein lenkbares und eingelenktes Rad betrachtet werden, an welchem der Verlauf des Rückstellmoments der Einfachheit halber über dem Lenkwinkel, welcher einfacher ermittelt werden kann als der Schräglaufwinkel, betrachtet wird; alternativ kann selbstverständlich auch an einem lenkbaren FahrzeugRad der Verlauf des Rückstellmoments über dem Schräglaufwinkel betrachtet werden.

Das Rückstellmoment an einem einen Schräglaufwinkel oder einen Lenkwinkel (jeweils ungleich "Null") aufweisenden Rad bzw. eine hier sog. Ersatzgröße hierfür kann auf verschiedene Weise ermittelt werden. So wäre es beispielsweise möglich, mit Hilfe geeignet(er) am Rad bzw. an der Aufhängung desselben angebauter Sensoren das Rückstellmoment selbst hinsichtlich Betrag und Richtung zu messen. Insbesondere kann hierfür die in der sog. Spurstange, welche üblicherweise an einem lenkbaren Rad einen Lenkeinschlag hervorruft, indem diese geeignet verlagert wird, wirkende Kraft gemessen werden, die eine Ersatzgröße für das Rückstellmoment darstellt.

Wenn oder solange derartige Messungen relativ aufwändig sind, ist es jedoch auch möglich, das Rückstellmoment zu schätzen, vorzugsweise abermals über die zugehörige Spurstange, indem die in dieser wirkende bzw. übertragene Kraft als sog. Ersatzgröße geschätzt wird. Dies ist unter Rückgriff auf einfacher messbare Eingangsgrößen mit ausreichender Genauigkeit durchaus möglich, wenn in einem im wesentlichen üblichen Lenksystem mit einem sog. Lenkmoment-Unterstützungsaktuator (= "Servo-Lenksystem") neben dem vom Fahrer an seinem Lenkrad aufgebrachtem Lenkmoment das vom Lenkmoment-Unterstützungsaktuator in das Lenksystem eingeleitete Moment zu Grunde gelegt wird, welches insbesondere im Falle eines elektrischen Servo-Motors relativ einfach durch Messung von Stromstärke und Drehzahl dieses Motors bestimmt werden kann.

Besonders einfach ist es jedoch, gemäß dem im vorliegenden Anspruch 1 enthaltenen Vorschlag den Verlauf des Rückstellmoments bzw. von dessen Ersatzgröße über dem Schräglaufwinkel oder Lenkwinkel an einem Rad oder an den Rädern einer Achse nicht direkt zu betrachten, sondern mittels einer vereinfachten Betrachtung lediglich zu überwachen, wann ein hier nun sog. "Einbruch" des Rückstellmoments über dem Lenkwinkel stattfindet. Zurückkommend auf die weiter oben theoretisch erläuterte Darstellung des Verlaufs des Rückstellmoments über dem Lenkwinkel in einem kartesischen Koordinatensystem (vgl. hierzu auch die beigefügte einzige Figur) gilt es also festzustellen, in welchem Lenkwinkel-Bereich der Bereich des (dort genannten) Maximums des Rückstellmoments liegt. Zur Erinnerung: Dieser Bereich liegt kurz vor dem querdynamischern Grenzbereich. Eine solche Feststellung ist nun mit den bekannten mathematischen Methoden der Regressionsanalyse oder der Koheränzanalyse jeweils innerhalb eines Zeitfensters relativ einfach durchführbar. Bei jedem dieser Verfahren ist für den vorliegenden Anwendungsfall ein das Rückstellmoment repräsentierendes Signal, vorzugsweise die geschätzte Spurstangenkraft, einerseits, und ein den Lenkwinkel repräsentierendes Signal andererseits zueinander in Relation zu setzen. Weitere Erläuterungen hierzu dürften an dieser Stelle nicht erforderlich sein, können jedoch den deutschen Patentanmeldungen 10 2007 043 209 und 10 2007 043 210 entnommen werden, in denen diese genannten Verfahren ebenfalls in Verbindung mit einer Erkennung eines instabilen Fahrzustands an einem zweispurigen Kraftfahrzeug vorgeschlagen sind. Als Eingangsgrößen werden in diesen beiden bezüglich der vorliegenden Anmeldung nicht vorveröffentlichten Patentanmeldungen jedoch - wie grundsätzlich bekannt - die Gierrate oder die Querbeschleunigung jeweils über dem Lenkwinkel vorgeschlagen.

Wenn also über eine Regressionsanalyse oder eine Koheränzanalyse festgestellt wird, dass mit Erreichen eines gewissen Lenkwinkels der o.g. "Einbruch" des Rückstellmoments erreicht ist, so kann im einfachsten Fall auch diese Tatsache, beispielsweise ausgedrückt in Form einer Sprungfunktion, als sog. Ersatzgröße für das Rückstellmoment im Sinne der vorliegenden Beschreibung verwendet werden. Diese wird vorliegend auch als Rückstellmoment-Indikator bezeichnet, das heißt als genannte Ersatzgröße für den Verlauf des Rückstellmoments wird ein sogenannter Rückstellmoment-Indikator als Maß für die Änderung des Rückstellmoments in Relation zur Änderung des Lenkwinkels oder Schräglaufwinkels innerhalb eines Zeitfensters gebildet.

Nachdem mit den bisherigen Erläuterung nun feststeht, bei welchem Lenkwinkel oder Schräglaufwinkel der querdynamische Grenzbereich erreicht wird oder kurz bevor steht, wird im Weiteren kurz beschrieben, wie diese Information vorteilhaft weiterverwendet werden kann. So kann bei erkannter Annäherung an den querdynamischen Grenzbereich oder bei Erreichen des querdynamischen Grenzbereichs ein entsprechendes Signal an ein anderes Fahrdynamik-Regelsystem abgegeben werden, welches daraufhin durch eine geeignete Maßnahme den Fahrzustand so zu verändern in der Lage ist, dass sich der Abstand zum Grenzbereich vergrößert. Im wesentlichen kann ein erfindungsgemäßes fahrdynamisches Steuerungs- oder Regelsystem somit grundsätzlich wie die eingangs genannten bekannten elektronischen Stabilitäts- oder Stabilisierungsprogramme arbeiten, mit dem Unterschied, dass eine andere und vorteilhafterweise geringfügig frühere Eingriffsschwelle genutzt werden kann, da - wie ausführlich erläutert wurde - durch Betrachtung des Verlaufs des Rückstellmoments bereits eine "Vorankündigung" des querdynamischen Grenzbereichs festgestellt werden kann. Mit dem vorliegenden fahrdynamischen Steuerungs- oder Regelsystem kann gemäß Anspruch 3 also sicher eine Stabilisierung eines nichtlinearen Fahrzustands durchgeführt werden noch bevor sich dieser zu einem instabilen Fahrzustand entwickelt.

Alternativ oder zusätzlich kann im Bedarfsfall, d.h. wenn eine Annäherung an den querdynamischen Grenzbereich durch die vorliegend geschilderte Bewertung des Verlaufs des Rückstellmoments der einen Schräglaufwinkel oder Lenkwinkel aufweisenden Räder über dem Schräglaufwinkel oder Lenkwinkel festgestellt wird, wie grundsätzlich bereits bekannt der Fahrer hierauf geeignet hingewiesen werden. Vorzugsweise kann dies - analog der eingangs genannten DE 10 2006 019 732 A1 oder DE 10 2007 007 442 A1 - durch geeignete Veränderung des dem Fahrer zur Verfügung gestellten Lenk-Unterstützungsmoments erfolgen. In diesem Sinne kann (nach Anspruch 4) aus dem Rückstellmoment oder einer Ersatzgröße hierfür ein sog. Rückstell-Zusatzmoment-Wert ermittelt werden, der einem auf eine übliche Weise ermittelten Sollmoment-Wert für den Lenkmoment-Unterstützungsaktuator (in einem zugehörigen Steuerungs- oder Regekreis) hinzugefügt wird, um den Fahrer auf die Annäherung an den querdynamischen Grenzbereich hinzuweisen. Durch diese im Sinne einer Grenzbereichserkennung frühzeitige Erkennung ist es also in besonders vorteilhafter Weise möglich, den Fahrer des Fahrzeugs auf eine drohende Instabilität hinzuweisen, so dass dieser eine solche durch einen entsprechenden Eingriff insbesondere an der Lenkung und/oder am Gaspedal abwenden kann. Analog kann der Fahrer auch auf sehr hohe Rückstellmomente hingewiesen werden, die sich beispielsweise aus einem Anschlagen beim Lenken eines Rades gegen einen Bordstein einstellen und die er bei herkömmlichen Lenkmoment-Unterstützungssystemen aufgrund eines relativ hohen Unterstützungsfaktors an seinem Lenkrad kaum zu spüren bekommt. In einem solchen Fall kann quasi ein negativer Rückstell-Zusatzmoment-Wert dem Sollmoment-Wert für den besagten Lenkmoment-Unterstützungsaktuator hinzugefügt werden, so dass der Fahrer den aus dem Anschlagen an einen Bordstein oder dgl. resultierenden Widerstand deutlicher an seinem Lenkrad verspürt.

Nachdem mit Hilfe eines erfindungsgemäßen fahrdynamischen Steuerungs- oder Regelsystems die Rückstellmomente an einzelnen Rädern oder Ersatzgrößen insbesondere in Form geschätzter Spurstangenkräfte ermittelt werden, kann diese Grundinformation auch noch anderweitig genutzt werden. So kann (gemäß Anspruch 4) jedenfalls bei gewünschter Geradeausfahrt des Fahrzeugs und Erkennung eines nennenswerten bezüglich der linken und rechten Fahrzeug-Seite asymmetrischen Rückstellmoments darauf geschlossen werden, dass sich das Fahrzeug bzw. dessen Räder zumindest einseitig in einer Spurrille befinden. Das hieraus resultierende für den Fahrer ungewohnte Lenkmoment-Gefühl an seinem Lenkrad kann dann verhindert bzw. kompensiert werden, indem in einem solchen Fall das Lenksystem durch das Steuerungs- und Regelsystem solchermaßen betätigt wird, das heißt geringfügig gelenkt wird, dass sich eine im wesentlichen symmetrische Verteilung des Rückstellmoments ergibt.

Abschließend nochmals auf den grundlegenden Gedanken der vorliegenden Erfindung zurückkommend, sei nicht nur auf den bereits erläuterten Vorteil hingewiesen, dass eine Annäherung an den querdynamischen Grenzbereich durch Betrachtung des Verlaufs des Rückstellmoments über dem Lenkwinkel oder Schräglaufwinkel früher als mit den bislang üblichen Verfahren und somit quasi prädiktiv erkannt werden kann. Vielmehr ist die Qualität der Rückmeldung über eine Annäherung an den querdynamischen Grenzbereich auch deshalb höher als im bekannten und üblichen Stand der Technik, weil das untersuchte Signal direkt von einem vom querdynamischen Grenzbereich betroffenen Bauteil stammt, indem das am FahrzeugRad angreifende Rückstellmoment analysiert wird, wobei das Zusammenwirken von Rad und Fahrbahn direkt für den querdynamischen Grenzbereich "zuständig" ist. Dieser Vorteil ist besonders dann relevant, wenn die lenkbaren Räder des Fahrzeugs nicht (mehr) mechanisch mit dem Lenkrad des Fahrers verbunden sind, das heißt wenn ein steer-by-wire-System vorliegt, oder wenn das Lenksystem eine relativ ungünstige Übertragung hinsichtlich Kinematik oder Systemträgheit oder Systemreibung aufweist. Als weiterer großer Vorteil eines erfindungsgemäßen fahrdynamischen Steuerungs- oder Regelsystems ist zu nennen, dass eine Rückmeldung realistischer Rückstellmomente auch bei Stillstand des Fahrzeugs möglich ist, so dass sogar im Stand des Fahrzeugs eine Abschätzung des Reibwerts sowie eine realistische Rückmeldung beim Lenken gegen ein Hindernis erfolgen kann

## Patentansprüche

1. Fahrdynamisches Steuerungs- oder Regelsystem eines zweispurigen Kraftfahrzeugs, wobei eine Annäherung des aktuellen Fahrzustands des Fahrzeugs an den querdynamischen Grenzbereich überwacht wird und im Bedarfsfall eine geeignete Aktion eingeleitet wird, mit welcher entweder der Fahrer auf die Annäherung an den Grenzbereich hingewiesen oder der Fahrzustand so verändert wird, dass sich der Abstand zum Grenzbereich vergrößert, und wobei die Annäherung an den querdynamischen Grenzbereich aus einer Bewertung des Verlaufs des Rückstellmoments der zumindest einen geringfügigen Schräglaufwinkel oder Lenkwinkel aufweisenden Fahrzeug-Räder oder einer Ersatzgröße hierfür über dem Schräglaufwinkel oder Lenkwinkel ermittelt wird, **dadurch gekennzeichnet, dass** ein bei zunehmendem Lenkwinkel oder Schräglaufwinkel nicht weiter zunehmendes oder sich verringerndes Rückstellmoment als Indiz für das Erreichen des nichtlinearen Fahrverhaltens und somit des querdynamischen Grenzbereichs verwendet wird, wobei ein sogenannter Rückstellmoment-Indikator als Maß für die Änderung des Rückstellmoments in Relation zur Änderung des Lenkwinkels oder Schräglaufwinkels innerhalb eines Zeitfensters durch eine Regressionsanalyse oder eine Kohärenzanalyse gebildet wird.

2. Fahrdynamisches Steuerungs- oder Regelsystem nach Anspruch 1, **dadurch gekennzeichnet, dass** das Rückstellmoment gemessen oder geeignet geschätzt wird, vorzugsweise in Form einer gemessenen oder geschätzten Kraft an den einen Lenkeinschlag an den lenkbaren Rädern des Fahrzeugs verursachenden Spurstangen von dessen Lenksystem.

3. Fahrdynamisches Steuerungs- oder Regelsystem nach einem der vorangegangenen Ansprüche, **dadurch gekennzeichnet, dass** bei erkannter Annäherung an den querdynamischen Grenzbereich oder bei Erreichen des querdynamischen Grenzbereichs ein entsprechendes Signal an ein anderes Fahrdynamik-Regelsystem abgegeben wird, welches daraufhin durch eine geeignete Maßnahme den Fahrzustand so zu verändern in der Lage ist, dass sich der Abstand zum Grenzbereich vergrößert.

4. Fahrdynamisches Steuerungs- oder Regelsystem nach einem der vorangegangenen Ansprüche, **dadurch gekennzeichnet, dass** bei gewünschter Geradeausfahrt des Fahrzeugs und Erkennung eines nennenswerten bezüglich der linken und rechten Fahrzeug-Seite asymmetrischen Rückstellmoments auf Fahren in Spurrinnen geschlossen wird, woraufhin das Lenksystem solchermaßen betätigt wird, dass eine im wesentlichen symmetrische Verteilung des Rückstellmoments vorliegt.

## Claims

1. A control or regulating system for driving dynamics of a double-track motor vehicle, wherein an approach of the current driving state of the vehicle to the transverse dynamic boundary region is monitored and if necessary, a suitable action is initiated, with which either the driver is alerted to the approach to the boundary region or the driving state is changed in such a way that the distance to the boundary region is increased, and wherein the approach to the transverse dynamic boundary region is derived from an evaluation of the course of the return torque of the vehicle wheels having at least a slight slip angle or steering angle or a substitute variable for this over the slip angle or steering angle, **characterised in that** a return torque that does not increase or reduce further with an increasing steering angle or slip angle is used as an indication of reaching the non-linear driving behaviour and therefore the transverse dynamic boundary region, a so-called return torque indicator being formed as a measure of the change in the return torque in relation to the change in the steering angle or slip angle within a time window by a regression analysis or a coherence analysis.

2. A control or regulating system for driving dynamics according to claim 1, **characterised in that** the return torque is measured or suitably estimated, preferably in the form of a measured or estimated force at the track rods, which cause a steering lock at the steerable wheels of the vehicle, of the steering system thereof.

3. A control or regulating system for driving dynamics according to any one of the preceding claims, **characterised in that** when an approach to a transverse dynamic boundary region is recognised or on reaching the transverse dynamic boundary region, a corresponding signal is emitted to another regulating system for driving dynamics, which thereupon is in a position to change the driving state by a suitable measure in such a way that the distance to the boundary region is increased.

4. A control or regulating system for driving dynamics according to any one of the preceding claims, **characterised in that** when it is desired for the vehicle to drive straight ahead and on recognition of a significant asymmetric return torque in relation to the left and right vehicle side, driving in ruts is indicated, whereupon the steering system is actuated in such a way that a substantially symmetrical distribution of the return torque is present.

## Revendications

1. Système de commande ou de régulation de la dynamique du déplacement d'un véhicule automobile à deux voies selon lequel on surveille une approche de l'état de déplacement actuel du véhicule de la zone limite de la dynamique transversale, et, en cas de besoin on déclenche une action adaptée par laquelle le conducteur est avisé de l'approche de la zone limite ou l'état de déplacement du véhicule est modifié de façon à augmenter la distance de la zone limite, et, on déduit l'approche de la zone limite de la dynamique transversale à partir de l'angle de désalignement dynamique ou de l'angle de braquage en évaluant les variations du couple de rappel des roues du véhicule présentant au moins un faible angle de désalignement dynamique ou de braquage ou une grandeur de remplacement,
**caractérisé en ce qu'**
on utilise un couple de rappel ne continuant pas à augmenter ou diminuant lorsque l'angle de braquage ou l'angle de désalignement dynamique augmente en tant qu'indice pour l'atteinte d'un comportement de déplacement non linéaire, et par suite de la zone limite de la dynamique transversale, un indicateur de couple de rappel étant formé en tant que mesure de la variation du couple de rappel par rapport à la variation de l'angle de braquage ou de l'angle de désalignement dynamique dans une fenêtre chronologique par analyse par régression ou analyse par cohérence.

2. Système de commande ou de régulation de la dynamique de déplacement conforme à la revendication 1,
**caractérisé en ce qu'**
on mesure ou apprécie de manière adaptée le couple de rappel, de préférence sous la forme d'une force mesurée ou appréciée s'appliquant sur les barres d'accouplement du système de direction, provoquant une action de braquage des roues directrices du véhicule.

3. Système de commande ou de régulation de la dynamique de déplacement conforme à l'une des revendications précédentes,
**caractérisé en ce que**
lorsqu'on a reconnu l'approche de la zone limite de la dynamique transversale, ou lorsqu'on a atteint cette zone limite de la dynamique transversale, un signal correspondant est transmis à un autre système de régulation de la dynamique de déplacement qui est susceptible en réponse, par une mesure adaptée de modifier l'état de déplacement de façon à augmenter la distance de la zone limite.

4. Système de commande ou de régulation de la dynamique de déplacement conforme à l'une des revendications précédentes,
**caractérisé en ce que**
lorsque l'on souhaite un déplacement linéaire du véhicule et que l'on a reconnu un couple de rappel notablement asymétrique concernant le côté gauche et le côté droit du véhicule on conclut à un déplacement dans des ornières de la voie et le système de direction est actionné de façon à obtenir une répartition essentiellement symétrique du couple de rappel.
